# EUROPÄISCHE PATENTSCHRIFT

(11) **EP 1 881 121 B1**
(45) Veröffentlichungstag und Bekanntmachung des Hinweises auf die Patenterteilung: **02.12.2009**
(21) Anmeldenummer: 07014008.2
(22) Anmeldetag: 17.07.2007
(51) Int. Cl.: E04B 1/82, B65G 21/00

(54) **Schalldämmende Fördervorrichtung**
Sound absorbing conveyor device
Dispositif d'acheminement isolant

(30) Priorität: 18.07.2006 DE 102006033264
(43) Veröffentlichungstag der Anmeldung: 23.01.2008
(73) Patentinhaber: Venjakob Maschinenbau GmbH & Co. KG, 33378 Rheda-Wiedenbrück (DE)
(72) Erfinder: Michalske, Andreas, 59302 Oelde (DE)
(74) Vertreter: DTS München

(56) Entgegenhaltungen:
- WO-A-02/053487
- WO-A-03/016142
- JP-A- 10 218 129

## Beschreibung

Die vorliegende Erfindung bezieht sich auf eine schalldämmende Fördervorrichtung und ein Verfahren zum Betreiben der Fördervorrichtung.

Unternehmen sind heutzutage bestrebt, die Lärmbelastung von im Fertigungsprozess eingesetzten Maschinen auf ein Minimum zu reduzieren.

Im Stand der Technik wurden für eine Verringerung der Lärmbelastung verschiedene Lösungsansätze vorgeschlagen.

Beispielsweise beschreibt die G 81 11 025.1 eine Schallschutzvorrichtung für schallgedämmte Räume, wobei schalldämmende Mittel eingesetzt werden.

Die DE 199 63 340 A1 beschreibt ein Schallschutzsystem für Fertigungsmaschinen, wobei eine Fertigungsmaschine von einer glockenartigen Kabine umgeben ist.

Die JP 410218129 A1 und die WO 03016142 A1 beschrieben jeweils schalldämmende Fördervorrichtungen, die jeweils Merkmale des Oberbegriffs des Anspruchs 1 aufweisen.

Derartige Schallschutzsysteme weisen allerdings den Nachteil auf, dass während einer Zufuhr von Werkstücken in den Fertigungsbereich und bei einem Austreten der bearbeiteten Werkstücke aus dem Fertigungsbereich eine erhöhte Lärmentwicklung rund um die Fertigungsmaschine und Fördervorrichtung auftritt und somit ein Betreiber einer derartigen Maschine einer entsprechenden Lärmbelastung ausgesetzt ist.

Aufgabe der vorliegenden Erfindung ist es daher, ein Verfahren und eine Vorrichtung zur Verfügung zu stellen, welche das vorhergehend erwähnte Problem des Standes der Technik löst.

Diese Aufgabe wird durch eine schalldämmende Fördervorrichtung und ein Verfahren zum Betreiben derselben gelöst.

Weitere vorteilhafte Ausgestaltungen der Erfindung sind in den abhängigen Ansprüchen angegeben.

Gemäß einem ersten Aspekt der vorliegenden Erfindung ist eine schalldämmende Fördervorrichtung (10) bevorzugt, die ein Förderband (20) umfasst, welches in eine Richtung (R) bewegbar ist, einen schalldämmenden Bereich (SB), welcher mindestens eine Öffnung (E, A) aufweist, wobei das Förderband (20) den schalldämmenden Bereich (SB) über die Öffnung (E, A) durchläuft; mindestens zwei schließende Schallschutzelemente (E1, E2), welche sich im Inneren des schalldämmenden Bereichs (SB) befinden, wobei die Öffnung (E, A) zu jedem beliebigen Zeitpunkt durch mindestens eines der Schallschutzelemente (E1, E2) geschlossen ist.

Unter einem Förderband versteht man ein Fördermittel, auf welches entsprechende Werkstücke aufgebracht werden können, um innerhalb einer schalldämmenden Fördervorrichtung bearbeitet werden zu können. Ein derartiges Bearbeiten ist bevorzugt ein Reinigen oder Lackieren der Werkstücke. Bevorzugt bewegt sich das Förderband mit einer vom Bediener der Fördervorrichtung festgelegten Geschwindigkeit in die Bewegungsrichtung R. Das Förderband wird dabei durch eine entsprechende Förderbandkette angetrieben.

Die Bewegungsrichtung R ist definitionsgemäß die Richtung, in welche das Förderband bewegt wird, sie verläuft von einer Eintrittsöffnung E zu einer Austrittsöffnung A der Fördervorrichtung.

Unter einem schalldämmenden Bereich SB versteht man einen Bereich, der entsprechende Wände und schalldämmende Wände W aufweist, um den Bearbeitungsbereich, in dem beispielsweise Werkstücke gereinigt oder lackiert werden, von einem Außenbereich, in welchem sich ein Betreiber der schalldämmenden Fördervorrichtung befindet, schalldämmend abzutrennen. Durch diese schalldämmende Abtrennung kommt es zu einer entsprechenden Lärmreduktion, die für eine angenehmere Arbeitsumgebung sorgt, da der Schallpegel dementsprechend reduziert wird.

Durch die Öffnung, die hier eine Eintrittsöffnung ist, werden zu reinigende oder zu bearbeitende Werkstücke mittels des Förderbandes in den Innenbereich des schalldämmenden Bereichs eingebracht. Im schalldämmenden Bereich werden die Werkstücke bearbeitet und verlassen anschließend nach dem Bearbeitungsvorgang über die Öffnung, die hier eine Austrittsöffnung ist, den schalldämmenden Bereich. Für die Bearbeitung der Werkstücke im Inneren des schalldämmenden Bereichs sind entsprechende Bearbeitungsvorrichtungen eingerichtet, bevorzugt Strahlmittel für eine CO₂-Reinigung mit Trockeneis oder Lackiervorrichtungen.

Im Inneren des schalldämmenden Bereichs befinden sich mindestens zwei Schallschutzelemente, wenn der schalldämmende Bereich nur eine Öffnung aufweist, die sich bevorzugt jeweils aus einem Paar von Schallschutztüren zusammensetzen. Wenn der schalldämmende Bereich nur eine Öffnung aufweist, dann entspricht die Eintrittsöffnung E gleich der Austrittsöffnung A. Bevorzugt ist allerdings der Fall, wo Eintrittsöffnung und Austrittsöffnung voneinander verschieden sind, also jeweils eine Eintrittsöffnung und eine separate Austrittsöffnung vorliegt. Die Schallschutzelemente können wechselweise entlang der Bewegungsrichtung des Förderbandes und mit der Geschwindigkeit des Förderbandes bewegt bzw. verschoben werden. Im Fall, wo es jeweils eine Eintrittsöffnung und eine Austrittsöffnung gibt, befinden sich bevorzugt vier Schallschutzelemente in dem schalldämmenden Bereich; jeweils zwei Schallschutzelemente bei der Eintrittsöffnung und jeweils zwei Schallschutzelemente bei der Austrittsöffnung.

Erfindungsgemäß weist das Förderband mindestens eine Ausnehmung (30) zum Aufnehmen der Schallschutzelemente (E1, E2, E3, E4) auf. Diese Ausnehmung weist bevorzugt einen rechteckigen Ausschnitt auf, welcher den Durchmesser der Stärke der Schallschutzelemente bzw. Schallschutztüren aufweist. Wenn die Schallschutztür eine Dicke bzw. Stärke von 5 cm aufweist, so liegt auch die Länge der Ausnehmung in Richtung R mindestens 5 cm, damit bei einem späteren Schließen in diesem Bereich die Schallschutzelemente schließen können. Die Ausnehmung ist bevorzugt auf beiden gegenüberliegenden Seiten des Förderbandes angeordnet. Bevorzugt sind die Ausnehmungen derart dimensioniert, dass das Förderband in seiner Funktionsweise nicht beeinträchtigt wird und nicht reißen kann.

Weiter ist es bevorzugt, dass das Schallschutzelement zusätzliche Vertiefungen V in der Schallschutztür aufweist, in welche die Förderkette FK des Förderbandes aufgenommen werden kann, wenn das Schallschutzelement vertikal in Richtung des Förderbandes herabbewegt wird. Um den Zwischenraum zwischen Schallschutzelement und Förderkette ebenso schalldämmend abzudichten, befinden sich in der Vertiefung bevorzugt zusätzliche Bürsten, die für eine entsprechende Schalldämmung sorgen. Die Bürsten sind dabei bevorzugt entlang der gesamten Vertiefung angeordnet um für eine optimale Schalldämmung zu sorgen. Ebenso ist es bevorzugt, dass die Schalldämmung zwischen Vertiefung V und Förderkette FK durch ein zusätzliches Schallschutzelement erfolgt, welches vor oder hinter die Vertiefung V des Schallschutzelementes geschoben wird und dadurch weiter für eine Schalldämmung sorgt.

Ebenso ist es bevorzugt, dass der Bereich des Förderbandes, welcher von den Schallschutzelementen umgeben wird, ebenso seitlich neben dem Förderband als auch über dem Förderband durch weitere ergänzende Schallschutzelemente umgeben ist, die eine Art "Käfig" um den zu bearbeitenden Gegenstand G bilden. Die ergänzenden Schallschutzelemente verlaufen bevorzugt mit der Geschwindigkeit des Förderbandes in die Bewegungsrichtung R. Im Bereich der Förderbandkette weisen die ergänzenden Schallschutzelemente mindestens eine Ausnehmung auf, an welcher bevorzugt schalldämmende Mittel, wie beispielsweise zusätzliche Bürsten oder zusätzliche Schallschutzelemente angebracht sind, die für eine zusätzliche Schalldämmung im Zwischenbereich zwischen Ausnehmung und ergänzendem Schallschutzelement sorgen.

Die Bearbeitungsvorrichtungen, wie beispielsweise CO₂-Düsen, sind dabei bevorzugt im Inneren des "Käfigs" angeordnet.

Die ergänzenden Schallschutzelemente sind dabei bevorzugt "teleskopartig" aus einer Vielzahl kleinerer Schallschutzelemente zusammengesetzt. Somit wird durch die Geometrie des "Käfigs", der sich aus den erfindungsgemäßen Schallschutzelementen und zusätzlichen ergänzenden Schallschutzelementen zusammensetzt, eine weitere verbesserte Schalldämmung erzielt.

Darüber hinaus können die Schallschutzelemente entlang der Ebene des Förderbandes senkrecht zur Bewegungsrichtung R des Förderbandes verschoben werden, wobei sich bei einem Schließen eines Schallschutzelements die Schallschutztüren aufeinander zu bewegen, bis sie sich gegenseitig berühren und entsprechend schalldämmend schließen. Bei einem Öffnen der Schallschutzelemente entfernen sich die Schallschutztüren solange voneinander, bis der Abstand zwischen ihnen groß genug ist, damit ein Werkstück zwischen den Schallschutztüren hindurch verlaufen kann.

Ebenso ist es bevorzugt, dass das Schallschutzelement aus nur einer Schallschutztür besteht, die vertikal von oben nach unten in Richtung des Förderbandes und umgekehrt bewegt bzw. verschoben werden kann. Dadurch ergibt sich der Vorteil, dass insgesamt nur zwei Schallschutztüren bei der Eintrittsöffnung oder Austrittsöffnung benötigt werden, um die Fördervorrichtung schalldämmend abzudichten.

Weiter sind die Schallschutzelemente entgegen der Bewegungsrichtung R des Förderbandes verschiebbar. Da die Schallschutzelemente mit der Geschwindigkeit des Förderbandes in die Bewegungsrichtung R bewegt werden können, werden sie nach Durchlaufen einer vorherbestimmten Strecke S, die größer als die Längenabmessung L eines Werkstücks ist, zurück an eine vorherbestimmte Austrittsposition gebracht und verlaufen von dieser Austrittsposition anschließend wieder mit der Geschwindigkeit des Förderbandes in die Bewegungsrichtung R. Bei dem Verschieben der Schallschutzelemente, die sich aus jeweils einem Paar Schallschutztüren zusammensetzen, verlaufen die Wände der Schallschutztüren parallel zur Bewegungsrichtung R.

Erfindungsgemäß ist die mindestens eine Öffnung, welche einmal die Eintrittsöffnung oder die Austrittsöffnung darstellt, durch mindestens eines der Schallschutzelemente zu jedem beliebigen Zeitpunkt schalldämmend geschlossen, wobei sich im Inneren des schalldämmenden Bereichs in der Nähe der Öffnung zwei Schallschutzelemente befinden. Mindestens eines dieser Schallschutzelemente ist dabei geschlossen. Wenn also das erste Schallschutzelement, welches sich am nächsten zur Eintrittsöffnung befindet, geöffnet ist, so ist das zweite Schallschutzelement, welches sich am nächsten zum ersten Schallschutzelement befindet, geschlossen. Wenn umgekehrt das erste Schallschutzelement geschlossen ist, so ist das zweite Schallschutzelement geöffnet oder ebenfalls geschlossen. Somit ist gewährleistet, dass mindestens eines der Schallschutzelemente zu jedem beliebigen Zeitpunkt immer geschlossen ist.

Somit ergibt sich vorteilhaft, dass der schalldämmende Bereich der Fördervorrichtung nach außen hin schalldämmend im Bereich der Öffnung geschlossen ist und es zu keiner Lärmbelästigung vom Innenbereich des schalldämmenden Bereich über die Öffnung in den Außenbereich kommt, wo sich ein Bediener der Fördervorrichtung befindet. Die Öffnung kann im Fall von nur einer Öffnung einmal als Eintrittsöffnung und einmal als Austrittsöffnung betrachtet werden.

Gemäß einem weiteren Aspekt der vorliegenden Erfindung ist es bevorzugt, dass die schalldämmende Fördervorrichtung die Öffnung (E, A) in Form einer Eintrittsöffnung (E) und eine Austrittsöffnung (A) umfasst, wobei die Fördervorrichtung weiter Schallschutzelemente (E1, E2, E3, E4) umfasst und die Eintrittsöffnung (E) zu jedem beliebigen Zeitpunkt durch mindestens eines der Schallschutzelemente (E1, E2) geschlossen ist und dass die Austrittsöffnung (A) zu jedem beliebigen Zeitpunkt durch mindestens eines der Schallschutzelemente (E3, E4) geschlossen ist.

Wie vorhergehend für den Fall einer Öffnung beschrieben wurde, ist es im Fall einer Eintrittsöffnung und einer Austrittsöffnung bevorzugt, dass sowohl die Eintrittsöffnung als auch die Austrittsöffnung zu jedem beliebigen Zeitpunkt durch im Bereich der Eintrittsöffnung durch eines der Schallschutzelemente (E1, E2) und im Bereich der Austrittsöffnung durch eines der Schallschutzelemente (E3, E4) geschlossen ist.

Als Beispiel sei dies anhand der Austrittsöffnung erläutert: Wird beispielsweise das vierte Schallschutzelement, welches sich am nächsten zur Austrittsöffnung befindet, geöffnet und das bearbeitete Werkstück aus dem schalldämmenden Bereich mittels des Förderbandes befördert, so ist das dritte Schallschutzelement, welches sich am nächsten zum vierten Schallschutzelement bei der Austrittsöffnung befindet, geschlossen. Ebenso ist es denkbar, dass das dritte Schallschutzelement geöffnet ist, dann ist allerdings das vierte Schallschutzelement geschlossen. Damit ist gewährleistet, dass der schalldämmende Bereich der Fördervorrichtung nach außen hin zu jedem beliebigen Zeitpunkt schalldämmend im Bereich der Austrittsöffnung geschlossen ist und es zu keiner Lärmbelästigung vom Innenbereich des schalldämmenden Bereichs über die Austrittsöffnung in den Außenbereich kommt, wo sich ein Bediener der Fördervorrichtung befindet.

Gemäß einem weiteren Aspekt der Erfindung ist es bevorzugt, dass im Bereich der Ausnehmung (30) mindestens ein weiteres Schallschutzelement (E5, E6, E7, E8, E9, E10, E11, E12) angeordnet ist. Das Schallschutzelement (E5, E6, E7, E8, E9, E10, E11, E12) befindet sich bevorzugt auf dem Förderband in der Nähe der Ausnehmung und weist bevorzugt die Funktion auf, für eine weitere Schalldämmung im Bereich der schließenden Schallschutzelemente zu sorgen, d.h. in einem Bereich, welcher zwischen Förderband und Schallschutzelement aus technischen Gründen nicht optimal geschlossen werden kann. Bevorzugt ist das Schallschutzelement (E5, E6, E7, E8, E9, E10, E11, E12) aus einem vergleichbaren Material wie das Förderband oder aus einem Material wie das Schallschutzelement hergestellt.

Gemäß einem weiteren Aspekt der vorliegenden Erfindung ist es bevorzugt, dass die schalldämmende Fördervorrichtung (10) ein Schalldämm-Maß von 10 bis 100 dB, bevorzugt von 25 bis 75 dB, besonders bevorzugt von 25 bis 60 dB aufweist. Um zwischen dem schalldämmenden Bereich und dem Außenbereich, in dem sich ein Bediener der Fördervorrichtung befindet, einen entsprechenden Schall- und Lärmschutz zu erzielen, ist es notwendig, dass die schalldämmende Fördervorrichtung über ein entsprechendes Schalldämm-Maß verfügt. Je nach dem, welcher Lärmpegel im Inneren des schalldämmenden Bereichs vorliegt, ist ein entsprechendes Schalldämm-Maß notwendig. Je höher der Wert für das Schalldämm-Maß ist, desto besser ist die Schalldämmung.

Gemäß einem weiteren Aspekt der vorliegenden Erfindung ist es bevorzugt, dass die Schallschutzelemente (E1, E2, E3, E4) aus Kunststoff, Leichtmetall, Edelstahl oder Stahl hergestellt sind. Durch die entsprechende Wahl des Herstellungsmaterials der Schallschutzelemente ergibt sich der Vorteil, dass die schalldämmende Fördervorrichtung individuell und anwendungsspezifisch ausgeführt sein kann. So lässt sich mit jedem einzelnen Material oder einer Kombination unterschiedlicher Materialien ein unterschiedliches Schalldämm-Maß erzielen, welches auf die entsprechenden Bedürfnisse bei der Fertigung und Weiterverarbeitung von Werkstücken abgestimmt ist.

Gemäß einem weiteren Aspekt der vorliegenden Erfindung ist es bevorzugt, dass die Schallschutzelemente (E1, E2, E3, E4) in die Bewegungsrichtung R und entgegen der Bewegungsrichtung R um eine Strecke von 0,1 m bis 5,0 m verschiebbar, bevorzugt von 0,5 bis 3,0 m verschiebbar, besonders bevorzugt von 0,5 bis 2,0 m verschiebbar sind. Durch die entsprechende Dimensionierung der Verschiebbarkeit der Schallschutzelemente, ergibt sich der Vorteil, dass die schalldämmende Fördervorrichtung auf die Abmessungen der zu behandelnden Werkstücke abgestimmt werden kann. Bei größeren und längeren Werkstücken sind die Schallschutzelemente entlang einer größeren Wegstrecke bzw. Distanz als bei kürzeren Werkstücken verschiebbar.

Gemäß einem weiteren Aspekt der vorliegenden Erfindung ist es bevorzugt, dass das Förderband (20) in der schalldämmenden Vorrichtung kreisförmig angeordnet sein kann. Erfindungsgemäß kann man sich eine derartige Anordnung bevorzugt so vorstellen, dass die Fördervorrichtung nur eine Öffnung aufweist, die sogleich Eintritts- als auch Austrittsöffnung ist und wobei das Förderband im Inneren der Fördervorrichtung einen kreisförmigen Verlauf nimmt. Vorteilhaft ergibt sich durch diese Ausführungsform, dass nur eine Öffnung und somit nur zwei Schallschutzelemente notwendig sind um für eine optimale Schalldämmung zu sorgen.

Die Aufgabe wird auch durch ein Verfahren zum Befördern mindestens eines Werkstücks (G) mittels einer schalldämmenden Fördervorrichtung (10) gelöst, wobei das Verfahren bei der Eintrittsöffnung (E) der Fördervorrichtung (10) die folgenden Schritte umfasst:
a. Verschließen eines Schallschutzelements (E1, E2) bei einer Position P2;
b. Bewegen des Förderbands in die Bewegungsrichtung (R), bis sich das Werkstück (G) zwischen der ersten Position P1 und der zweiten Position P2 befindet;
c. Verschließen eines Schallschutzelements (E1, E2) bei der ersten Position P1.

Unter einem Verschließen eines Schallschutzelements (E1, E2) bei einer Position P2 versteht man, dass sich bei der Position P2, die sich im Inneren des schalldämmenden Bereichs der Fördervorrichtung befindet, die Schallschutztüren der Schallschutzelemente (E1, E2) derart aufeinander zu bewegen, bis sie schalldämmend schließen. Bevorzugt wird dabei nur eines der Schallschutzelemente (E1, E2) geschlossen.

Unter dem Schritt des Bewegens des Förderbands mit mindestens einem darauf befindlichen Werkstück (G) in die Bewegungsrichtung (R), bis sich der Werkstück zwischen der ersten Position P1 und der zweiten Position P2 befindet versteht man, dass das Werkstück mit dem Förderband in das Innere des schalldämmenden Bereichs, an eine Stelle zwischen der ersten und zweiten Position gebracht wird.

Sobald sich das Werkstück an der gewünschten Stelle im Inneren des schalldämmenden Bereichs befindet, wird das Schallschutzelement (E1, E2) bevorzugt bei der ersten Position P1 geschlossen.

Damit ist die schalldämmende Vorrichtung zu jedem beliebigen Zeitpunkt nach außen hin schalldämmend geschlossen.

Gemäß einem weiteren Aspekt der vorliegenden Erfindung ist es bevorzugt, dass das Verfahren weiter die Schritte umfasst:
d. Bewegen mindestens eines geschlossenen Schallschutzelements (E1, E2) um eine Strecke (S) in die Bewegungsrichtung (R) bis sich das mindestens eine Schallschutzelement (E1, E2) bei einer Position P2a befindet.

Unter dem Bewegen mindestens eines geschlossenen Schallschutzelements (E1, E2) um eine Strecke (S) versteht man, dass anschließend bevorzugt mindestens ein geschlossenes Schallschutzelement, bevorzugt das schalldämmend geschlossene erste Schallschutzelement (E1) und das geschlossene zweite Schallschutzelement (E2) um eine Strecke (S) in die Bewegungsrichtung (R) bewegt werden, bis sich das zweite Schallschutzelement (E2) bei einer Position P2a und das erste Schallschutzelement (E1) bei der Position P2 befindet. Während dieses Bewegungsvorgangs findet ein Fertigungs- oder Bearbeitungsprozess innerhalb der Fördervorrichtung statt, welcher bevorzugt ein Reinigungsprozess oder ein Lackierprozess ist.

Anschließend wird das zweite Schallschutzelements (E2) bevorzugt geöffnet gegen die Bewegungsrichtung (R) des Förderbandes zu der Position P1 verschoben, wobei die Wände der Schallschutztüren des zweiten Schallschutzelements parallel zur Bewegungsrichtung R verlaufen. Gleichzeitig wird das erste Schallschutzelement E1 von der Position P2 zur Position P2a mit der Geschwindigkeit des Förderbandes bewegt. Damit ist es möglich, dass anschließend das zweite Schallschutzelement (E2) an der Position P1, wo sich vorher das erste Schallschutzelement (E1) geschlossen hat, schalldämmend geschlossen werden kann.

Während des erfindungsgemäßen Verfahrens wird diese Abfolge des Öffnens und Schließens der Schallschutzelemente (E1, E2), Bewegen in die Bewegungsrichtung R und entgegen der Bewegungsrichtung beliebig oft und abhängig von der Anzahl der zu bearbeitenden Werkstücke wiederholt. Durch die Abfolge der vorhergehend erwähnten Bewegungsabfolgen ergibt sich eine "raupenförmige" Bewegung.

Gemäß einem weiteren Aspekt der vorliegenden Erfindung ist es bevorzugt, dass das mindestens eine geschlossene Schallschutzelement (E1, E2) mit der Geschwindigkeit des Förderbandes in die Bewegungsrichtung R bewegt wird. Dadurch ergibt sich der Vorteil, dass beispielsweise während eines Bearbeitungsvorgangs, z.B. eines Reinigens oder Lackierens, die Schallschutzelemente fest verschlossen sind und es zu einer optimalen Schalldämmung kommt.

Gemäß einem weiteren Aspekt der vorliegenden Erfindung ist es bevorzugt, dass das Verfahren zum Befördern mindestens eines Werkstücks (G) mittels einer schalldämmenden Fördervorrichtung (10) bei der Austrittsöffnung (A) der Fördervorrichtung (10) die folgenden Schritte umfasst:
- Bewegen mindestens eines geschlossenen Schallschutzelements (E3, E4) in die Bewegungsrichtung (R) um eine vorherbestimmte Strecke (S) von einer Position P3 zu einer Position P4;
- Gleichzeitiges Bewegen eines Schallschutzelements (E3, E4) entgegen der Bewegungsrichtung R des Förderbandes von der Position P4 zur Position P3 und Verschließen eines Schallschutzelements (E3, E4) bei der dritten Position P3;
- Öffnen eines Schallschutzelements (E3, E4) bei der Position P4.

Unter dem Schritt des Bewegens eines geschlossenen Schallschutzelements (E3, E4) in die Bewegungsrichtung (R) um eine vorherbestimmte Strecke (S) von der Position P3 zu der Position P4 versteht man, dass ein Werkstück eine Reinigungs- oder Lackierstrecke innerhalb der Fördervorrichtung durchlaufen hat und sich der Austrittsöffnung nähert. Um eine entsprechende Schalldämmung zu gewährleisten, ist mindestens ein Schallschutzelement (E3, E4) geschlossen.

Unter einem Bewegen mindestens eines Schallschutzelements (E3, E4) entgegen der Bewegungsrichtung R des Förderbandes von der Position P4 zur Position P3 und Verschließen eines Schallschutzelements (E3, E4) bei der dritten Position P3 versteht man, dass ein Schallschutzelement (E3, E4) in Position gebracht wird, um in einem weiteren Schritt, wenn das ein Schallschutzelement (E3, E4) geöffnet wird, um das bearbeitete Werkstück G' aus der Fördervorrichtung auszugeben, die Fördervorrichtung schalldämmend abzuschließen. Der Schritt des Bewegens des dritten und/oder vierten Schallschutzelements läuft dabei derart ab, dass sich das dritte und vierte Schallschutzelement nicht gegenseitig behindern.

Anschließend wird das Schallschutzelement (E3, E4) bei der Position P3 geschlossen.

Damit das Werkstück die Fördervorrichtung mittels des Förderbandes über die Austrittsöffnung verlassen kann, wird das Schallschutzelement (E3, E4) bei der Position P4 geöffnet.

Weiter folgt ein gleichzeitiges Bewegen mindestens eines Schallschutzelements (E3, E4) mit der Geschwindigkeit des Förderbandes (20) in die Bewegungsrichtung R und ein Ausstoßen des bearbeiteten Werkstücks G' aus der schalldämmenden Fördervorrichtung.

Der Vorgang wird anschließend wieder von vorne wiederholt, wobei jeweils gewährleistet ist, dass es zu keiner erhöhten Lärmbelastung vom Inneren des schalldämmenden Bereichs über die Austrittsöffnung in den Außenbereich kommt.

Gemäß einem weiteren Aspekt der vorliegenden Erfindung ist es bei dem Verfahren bevorzugt, dass sich die Schallschutzelemente (E3, E4) gleichzeitig mit der Geschwindigkeit des Förderbandes oder mit einer anderen und voneinander unterschiedlichen Geschwindigkeit in die Bewegungsrichtung R des Förderbandes bewegen können. Das Schallschutzelement E3 und das Schallschutzelement E4 können dabei bevorzugt unterschiedliche Geschwindigkeiten aufweisen.

Gemäß einem weiteren Aspekt der vorliegenden Erfindung ist es bei dem Verfahren bevorzugt, dass die vorherbestimmte Strecke (S) größer als die Längenabmessung (L) eines auf dem Förderband (20) befindlichen Werkstückes (70) ist. Dadurch ergibt sich der Vorteil, dass ein Werkstück auf dem Förderband ausreichend Platz hat und bei einem Schließen und Öffnen der Schallschutztüren nicht beschädigt wird.

Bevorzugte Ausführungsformen der Erfindung werden nachfolgend anhand der beigefügten Zeichnung näher erläutert.

Die **Figuren 1a bis 1m** zeigen eine Draufsicht auf die erfindungsgemäße Fördervorrichtung, wobei der Verlauf des Öffnens und Schließens der Schallschutzelemente E1 bis E4 dargestellt ist.

Die **Figur 1n** zeigt Ausnehmungen und weitere Schallschutzelemente auf dem Förderband.

Die **Figur 2** zeigt eine Draufsicht auf eine kreisförmige Anordnung eines Förderbandes in der erfindungsgemäßen Fördervorrichtung.

Die **Figur 3** zeigt eine weitere Ausführungsform der vorliegenden Erfindung, wobei zusätzliche ergänzende Schallschutzelemente eingesetzt werden.

Die **Figuren 4** **a und 4b** zeigen eine weitere Ausführungsform des Schallschutzelements mit zusätzlicher Schalldämmung mittels Bürsten und zusätzlichen Schallschutzelementen.

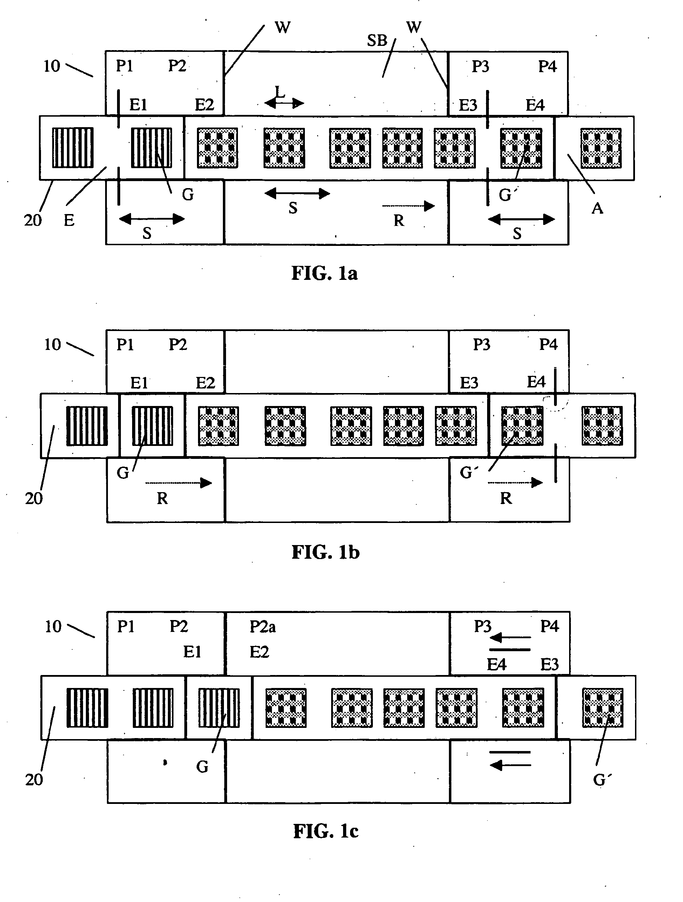

In **Figur 1a** ist eine Draufsicht auf die erfindungsgemäße schalldämmende Fördervorrichtung 10 dargestellt. Ein Förderband 20 verläuft von der Eintrittsöffnung E entlang der Bewegungsrichtung R über die Austrittsöffnung A durch einen schalldämmenden Bereich SB. Der schalldämmende Bereich SB weist als einzige Öffnungen die Eintrittsöffnung E und die Austrittsöffnung A auf.

Auf dem Förderband 20 sind Werkstücke G und G' in regelmäßigen Abständen S angeordnet.

Die unbehandelten Werkstücke G sind dabei gestrichelt dargestellt. Die bearbeiteten Werkstücke G' sind kariert dargestellt. Bei den Werkstücken G handelt es sich um zu reinigende Kunststoffsteile, die mit einer CO2-Reinigung behandelt werden.

Die Werkstücke weisen eine Länge L auf, die 0,5 m bis 1,1 m betragen kann.

Im Inneren des schalldämmenden Bereichs SB sind weiter Schallschutzelemente E1, E2, E3 und E4 angeordnet, die horizontal, also in die Bewegungsrichtung R und entgegen der Bewegungsrichtung R verschiebbar und vertikal, also senkrecht zu der Bewegungsrichtung R verschiebbar sind.

Weiter stellen die im Bereich der Eintritts- und Austrittsöffnung und entlang der Richtung des Förderbandes verstärkt dargestellten Linien weitere schalldämmende Wände W im Inneren der Fördervorrichtung dar, sodass der schalldämmende Bereich SB zusätzlich über die schalldämmenden Wände W nach außen schalldicht abgeschlossen ist. Somit wird eine optimale Schalldämmung nach außen hin erzielt wird.

In Figur 1a sind die Schallschutzelemente E1 und E3 in einer geöffneten Position dargestellt. Das Schallschutzelement E1 befindet sich bei der Position P1, das Schallschutzelement E3 bei der Position P3.

Die Schallschutzelemente E2 und E4 sind geschlossen. Das Schallschutzelement E2 befindet sich bei der Position P2, das Schallschutzelement E4 bei der Position P4.

Dadurch dass die Schallschutzelemente E2 und E4 geschlossen sind, ist der schalldämmende Bereich SB nach außen hin schalldämmend abgeschlossen.

Die Schallschutzelemente E1 bis E4 können aus Metall, Kunststoff oder anderen Materialien gefertigt werden.

Rechts von dem Schallschutzelement E2 befindet sich jener schalldämmende Bereich SB, wo die Werkstücke G bearbeitet und behandelt werden. Die bearbeiteten Werkstücke G' sind kariert dargestellt um zu verdeutlichen, dass an ihnen entsprechende Bearbeitungsprozesse vorgenommen wurden.

In dem Bereich zwischen den Positionen P1 und P4 finden innerhalb des schalldämmenden Bereichs SB die späteren Bearbeitungsprozesse, wie Reinigungs- oder Lackierprozesse statt.

Der Abstand S der Schallschutzelemente E1 und E2 und der Schallschutzelemente E3 und E4 beträgt 1 m und ist größer als die Länge L der Werkstücke G und G', die 0,8 m beträgt. Dadurch ist gewährleistet, dass die Werkstücke auf dem Förderband einen ausreichenden Platz zwischen der Schallschutzelementen E1 und E2, sowie E3 und E4 aufweisen.

In einem ersten Schritt wird das unbehandelte Werkstück G mit dem Förderband 20 und dem sich mitbewegenden Schallschutzelement E2 um 1 m in die Bewegungsrichtung des Förderbandes bewegt, sodass es sich zwischen der Position P1 und P2 befindet. Die Geschwindigkeit des Förderbandes beträgt dabei 0,01 m/s bis 0,1 m/s.

Durch die Bewegung des Förderbandes 20 in die Bewegungsrichtung R bewegt sich das Schallschutzelement E4 von der Position P3 zu der P4, wie die Konfiguration der Schallschutzelemente E3 und E4 in Figur 1a zeigt.

Das Schallschutzelement E4 befindet sich in unmittelbarer Nähe vor der Austrittsöffnung A, wodurch eine entsprechende Schalldämmung erzielt wird.

Nachdem das Werkstück G die Eintrittsöffnung E passiert hat, wird das Schallschutzelement E1 in **Figur 1b** bei der Position P1 schalldämmend geschlossen, indem sich die Schallschutztüren des Schallschutzelements E1 aufeinander zu bewegen.

Ebenso wird das Schallschutzelement E3 bei der Position P3 schalldämmend geschlossen, indem sich die Schallschutztüren aufeinander zu bewegen, d.h. in der Figur in horizontaler Richtung.

Das Werkstück G, welches in weiterer Folge in dem Bearbeitungsbereich zwischen den Positionen P1 bis P4 zum Werkstück G' bearbeitet wird, ist jetzt von den geschlossenen Schallschutzelementen E1 und E2 umgeben. Die Eintrittsöffnung E ist somit durch zwei geschlossene Schallschutzelemente E1 und E2 schalldämmend abgeschlossen.

In dem Bereich zwischen den Positionen P1 und P2 wird an dem Werkstück G eine CO₂-Reinigung mit entsprechenden Strahlmitteln des Standes der Technik vorgenommen.

Bei der Austrittsöffnung A öffnet sich anschließend das Schallschutzelement E4, indem sich die Schallschutztüren voneinander in der Ebene des Förderbandes 20, in der Draufsicht der Figur 1b also horizontal, wegbewegen.

In einem weiteren Schritt bewegt sich das Förderband 20 mit der Geschwindigkeit von 0,01 m/s bis 0,1 m/s in die Bewegungsrichtung R, was durch die beiden Pfeile dargestellt ist, und das Förderband 20 gelangt zu der in **Figur 1c** dargestellte Anordnung.

Dabei hat sich das Werkstück mit den Schallschutzelementen E1 und E2 mittels des Förderbandes zwischen die Position P2 und P2a weiterbewegt, wobei die Geschwindigkeit der Schallschutzelemente E1 und E2 gleich der Geschwindigkeit des Förderbandes 20 ist. Jedoch sind das Förderband und die Schallschutzelemente nicht miteinander fest verbunden sondern voneinander unabhängig steuerbar. Dies ist insofern beim Bewegen der Schallschutzelemente E1 bis E4 notwendig.

Das Schallschutzelement E1 befindet sich jetzt bei der Position P2, das Schallschutzelement E2 bei der Position P2a. Die Position P2 und die Position P2a weisen voneinander einen Abstand S von 1 m auf.

Im Bereich der Austrittsöffnung A hat sich das Schallschutzelement E3 ebenfalls mit der Geschwindigkeit des Förderbandes 20 von der Position P3 zu der Position P4 bewegt.

Das bearbeitete Werkstück G', welches sich auf dem Förderband befindet, hat sich durch das geöffnete Schallschutzelement E4, wie es in Figur 1b dargestellt ist, und durch die Austrittsöffnung A bewegt. Das Werkstück G' befindet sich außerhalb der schalldämmenden Fördervorrichtung und kann jetzt die Fördervorrichtung verlassen, um entsprechend weiterverarbeitet oder verpackt zu werden.

Das Schallschutzelement E4 bewegt sich in Figur 1c von der Position P4 zur Position P3 entgegen der Bewegungsrichtung R des Förderbandes und mit der Geschwindigkeit von 0,01 m/s. Die Wände der Schallschutztüren verlaufen dabei parallel zur Verlaufsrichtung des Förderbands und entgegen der Bewegungsrichtung R des Förderbandes.

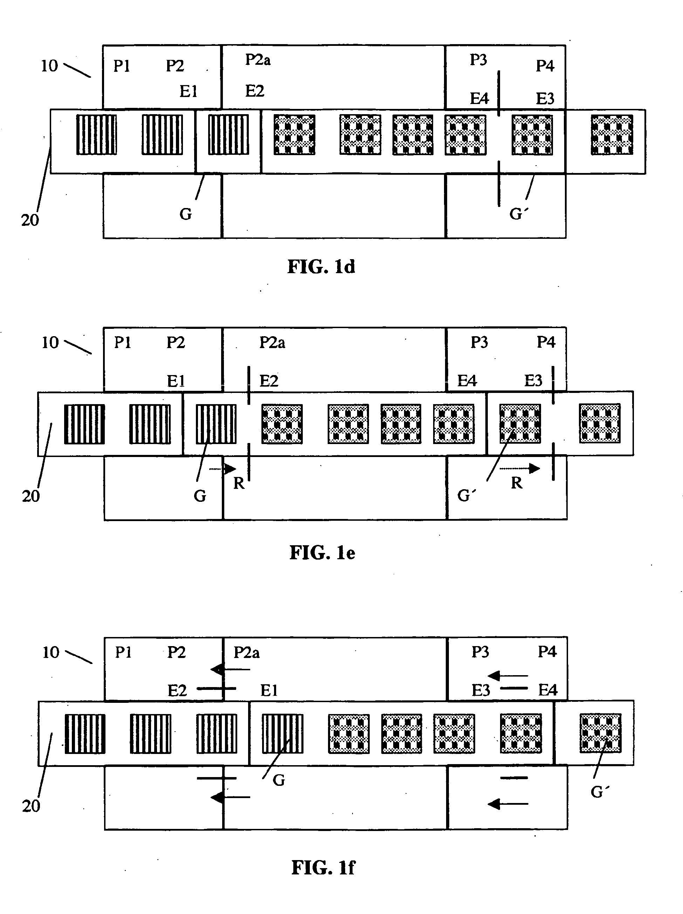

In **Figur 1d** befindet sich das Schallschutzelement E4 bei der Position P3 in einer geöffneten Position, nachdem es, wie in Figur 1c beschrieben, verschoben wurde.

In **Figur 1e** wird das Schallschutzelement E4 bei der Position P3 geschlossen und das Schallschutzelement E3 bei der Position P4 geöffnet. Das Schallschutzelement E2 wird bei der Position P2a geöffnet.

In einem nächsten Schritt bewegt sich das Förderband 20 in die Bewegungsrichtung R, wobei das bearbeitete Werkstück G' die Fördervorrichtung über die Austrittsöffnung A verlässt.

Das geschlossene Schallschutzelement E1 bewegt sich beim Übergang von der **Figur 1e** zur **Figur 1f** von der Position P2 zur Position P2a. Ebenso bewegt sich das geschlossene Schallschutzelement E4 von der Position P3 zur Position P4 und die Schallschutztüren des Schallschutzelements E3 bewegen sich parallel zur Bewegungsrichtung R und entgegen der Bewegungsrichtung R von der Position P4 zur Position P3.

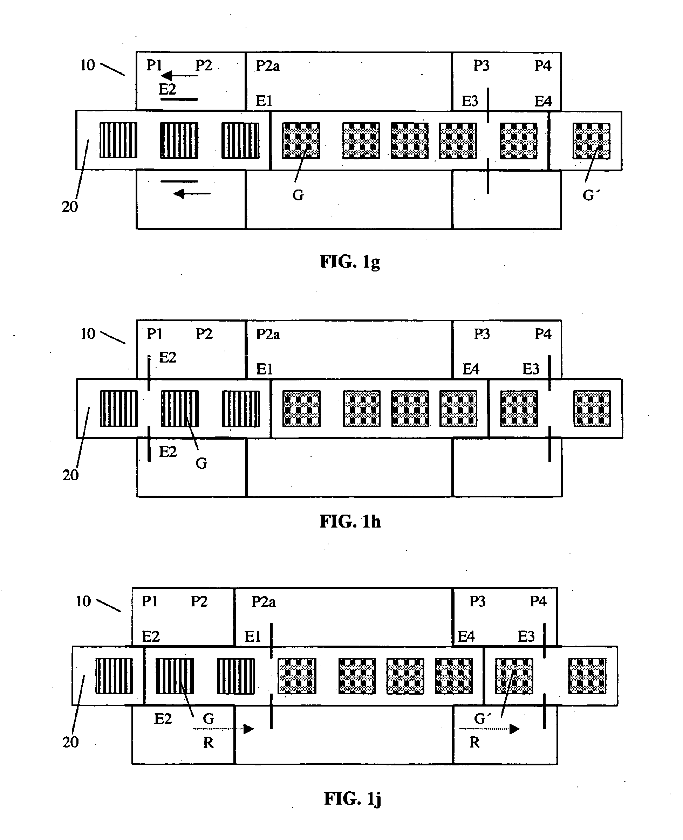

Ebenso bewegen sich die Schallschutztüren des geöffneten Schallschutzelements E2, indem sich die Schallschutztüren parallel und entgegen der Bewegungsrichtung R von der Position P2a über die Position 2 zur Position P1 bewegen, wie in **Figur 1g** dargestellt ist. Das Schallschutzelement E3 wird in Position P3 in eine geöffnete Position gebracht, das geschlossene und vorhin mit dem Förderband 20 mitbewegte Schallschutzelement E4 befindet sich in unmittelbarer Nähe zur Austrittsöffnung A.

In Figur 1h ist zu sehen, dass sich im Bereich der Eintrittsöffnung E das geöffnete Schallschutzelement E2 bei Position P1 und das geschlossene Schallschutzelement E1 bei Position P2a befindet.

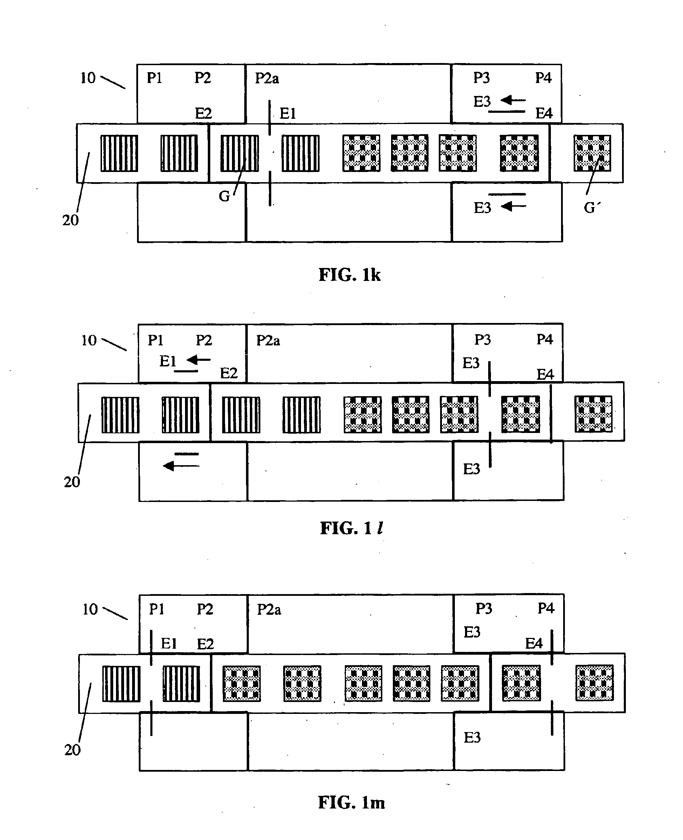

In einem nächsten Schritt wird in den **Figuren 1j** **und** **1k** das Schallschutzelement E2 bei Position P1 geschlossen. Das Förderband 20 bewegt sich mit den beiden zwischen den Positionen P1 und P2a auf dem Förderband aufgebrachten Werkstücken G mit dem Schallschutzelement E1 von der Position P1 zur Position P2. Das näher zur Position P2a befindliche Werkstück G durchläuft die geöffneten Schallschutztüren des Schallschutzelements E1. Ebenso wird das Werkstück G' von der Position P3 über die Position P4 durch die geöffneten Schallschutztüren des Schallschutzelements P4 außerhalb der schalldämmenden Fördervorrichtung befördert.

In **Figur 1l** ist ersichtlich, dass die Schallschutztüren des Schallschutzelements E1 von der Position P2a zur Position P1, wobei die Wände der Schallschutztüren entgegen der Bewegungsrichtung R und parallel zu R verlaufend verschoben werden. Ebenso werden die von der Position P4 zur Position P3 bewegten Schallschutztüren des Schallschutzelements E3 in einer offenen Position gehalten.

Abschließend ist in **Figur 1m** dargestellt, dass die Schallschutztüren des Schallschutzelements E1 bei der Position P1 in einer offenen Position gehalten werden, um einem weiteren Werkstück zu ermöglichen, in die schalldämmende Fördervorrichtung aufgenommen zu werden. Die Schallschutztüren des Schallschutzelements E3 sind geschlossen, die des Schallschutzelements E4 sind geöffnet.

In weiterer Folge wiederholen sich die in den **Figuren 1a bis 1m** beschriebenen Vorgänge eines Öffnens und Schließens der Schallschutzelemente E1 bis E4 und des Bewegens der Schallschutzelemente E1 bis E4 mit der Geschwindigkeit des Förderbandes in die Bewegungsrichtung und entgegen der Bewegungsrichtung, wobei jeweils Werkstücke "raupenartig" in den schalldämmenden Bereich SB der schalldämmenden Fördervorrichtung 10 über die Eintrittsöffnung E hineinbefördert und über die Austrittsöffnung A aus dem schalldämmenden Bereich SB wieder herausgefördert werden, wobei jeweils mindestens ein Schallschutzelement E1 oder E2 bei der Eintrittsöffnung E und jeweils mindestens ein Schallschutzelement E3 oder E4 bei der Austrittsöffnung A schalldämmend geschlossen ist.

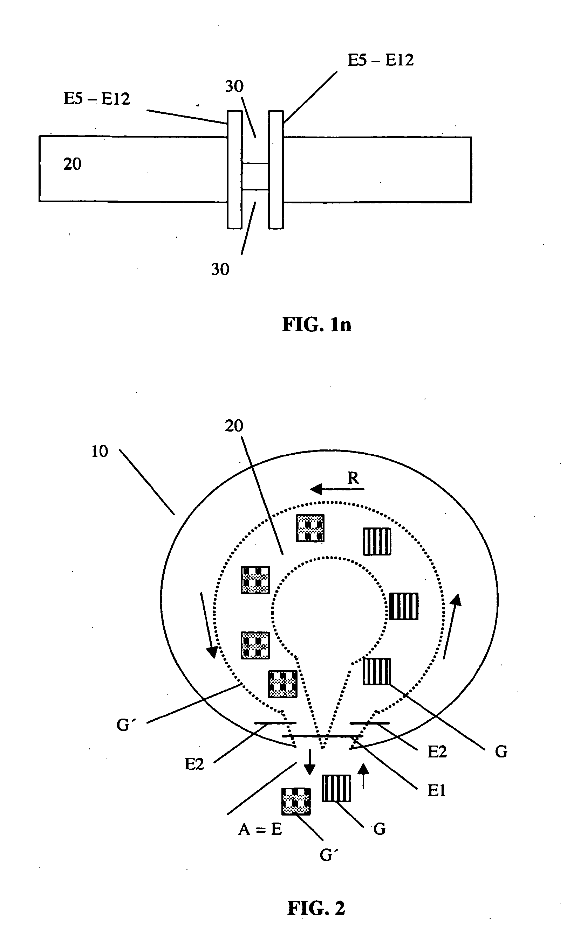

In der **Figur 1n** sind die Ausnehmungen 30 zu beiden gegenüberliegenden Seiten des Förderbandes dargestellt, sowie die weiteren Schallschutzelemente E5 bis E12.

In **Figur 2** ist eine Draufsicht auf die Fördervorrichtung 10 mit nur einer Öffnung dargestellt. Diese Öffnung stellt sowohl die Eintrittsöffnung E als auch Austrittsöffnung A dar.

Durch die Fördervorrichtung 10 erstreckt sich das Förderband 20 in einer kreisförmigen Geometrie. Dabei werden zu behandelnde Werkstücke G über die Eintrittsöffnung E aufgenommen. Hier dargestellt befindet sich ein Werkstück G noch außerhalb des schalldämmenden Bereichs SB, während ein bereits bearbeitetes Werkstück G' den schalldämmenden Bereich SB bereits verlassen hat.

Das erste Schallschutzelement E1 ist geschlossen. Dieses setzt sich aus einer Schallschutztür zusammen, die vertikal von oben nach unten und umgekehrt verschoben werden kann.

Weiter ist erkennbar, dass das zweite Schallschutzelement E2 geöffnet ist.

Auf dem Förderband befindet sich eine Vielzahl von Werkstücken G und G', die noch zu bearbeiten sind oder bereits bearbeitet wurden.

Die Pfeile, die in der Nähe des Förderbandes 20 eingezeichnet sind, zeigen die Bewegungsrichtung R des Förderbandes 20 an, wobei sich dieses entgegen dem Uhrzeigersinn bewegt.

In einem weiteren Schritt, der hier nicht dargestellt ist, wird das Förderband weiterbewegt, sodass sich das Werkstück G unmittelbar vor dem Schallschutzelement E1 befindet. Das bereits bearbeitete Werkstück G' befindet sich zwischen dem geöffneten Schallschutzelement E2 und dem geschlossenen Schallschutzelement E1.

Anschließend wird das Schallschutzelement E2 ebenso geschlossen, wobei sich das Schallschutzelement E2 aus zwei Schallschutztüren zusammensetzt, die sich horizontal aufeinander zubewegen. Das Werkstück G' befindet sich jetzt schalldämmend zwischen E1 und E2.

In einem weiteren Schritt wird das Schallschutzelement E1 geöffnet, das Schallschutzelement E2 bleibt weiterhin geschlossen, um eine schalldämmende Abdichtung zwischen Außenbereich und schalldämmenden Bereich SB der Fördervorrichtung 10 zu gewährleisten.

In einem weiteren Schritt wird das bearbeitete Werkstück von dem Förderband entfernt und das Schallschutzelement E1 wieder geschlossen. Anschließend wird das Schallschutzelement E2 geöffnet, wobei das Werkstück G in den schalldämmenden Bereich SB der Fördervorrichtung 10 gelangt.

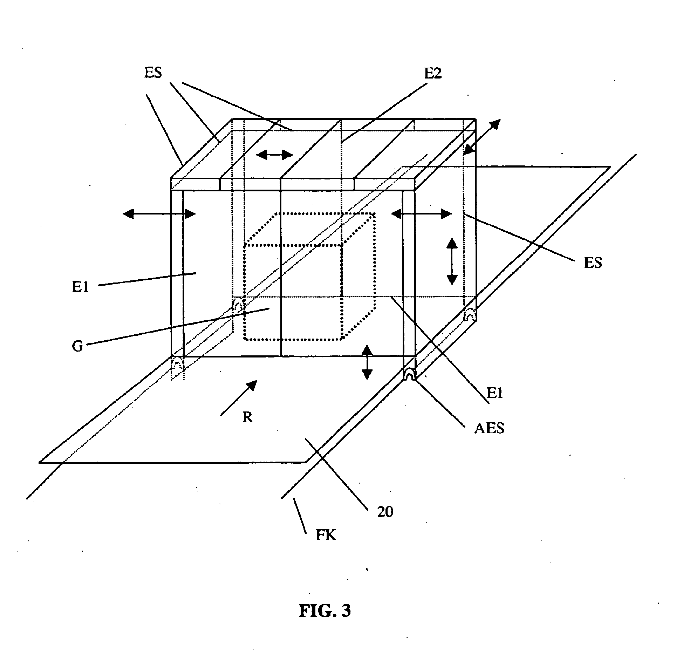

In **Figur 3** ist eine dreidimensionale Ansicht einer weiteren bevorzugten Ausführungsform der vorliegenden schalldämmenden Fördervorrichtung 10 dargestellt.

Neben den bereits in den Figuren 1a bis 1n und Figur 2 erwähnten Schallschutzelementen sind dabei zusätzliche ergänzende Schallschutzelemente ES dargestellt, welche sich seitlich parallel entlang des Förderbandes 20 und über dem Förderband erstrecken und den zu bearbeitenden Gegenstand G "käfigförmig" umschließen.

Im Bereich der Förderkette FK des Förderbandes weist das ergänzende Schallschutzelement eine Ausnehmung AES auf, sodass hier das ergänzende Schallschutzelement ES auf der Förderkette FK aufliegen kann, wobei auf der Ausnehmung AES zusätzliche Bürsten aufgebracht sind (nicht dargestellt), um für eine zusätzliche Schalldämmung zu sorgen.

Im vorderen Bereich der Darstellung ist das erste Schallschutzelement E1 dargestellt, im hinteren Bereich das Schallschutzelement E2, die sich jeweils aus zwei Schallschutztüren zusammensetzen, die horizontal entlang der Ebene des Förderbandes 20 verschiebbar sind.

Weiter sind die Bewegungsrichtung R des Förderbandes, sowie weitere mögliche Bewegungsrichtungen der ergänzenden Schallschutzelemente ES durch entsprechende Pfeile dargestellt. Das ergänzende Schallschutzelement im Seitenbereich ist dabei vertikal in der Höhe verschiebbar, die ergänzenden Schallschutzelemente im oberen Bereich, die sich hier aus einer vier einzelnen ergänzenden Schallschutzelementen zusammensetzen, sind horizontal verschiebbar.

Darüber hinaus werden die ergänzenden Schallschutzelemente ES wie auch die Schallschutzelemente E1 und E2 im hier dargestellten Ausführungsbeispiel mit der Geschwindigkeit des Förderbandes 20 in die Bewegungsrichtung R mitbewegt, sodass es während eines Bearbeitungsschrittes mittels geeigneter Bearbeitungsvorrichtungen, die sich im Inneren des "Käfigs" befinden (hier nicht dargestellt), zu einer entsprechenden Schalldämmung kommt.

Wenn der Bearbeitungsvorgang abgeschlossen ist, werden die entsprechenden ergänzenden Schallschutzelemente wieder geöffnet und von den Schallschutzelementen E1 und E2 bleibt mindestens eines geschlossen, um die erfindungsgemäß vorgeschlagene Lösung einer Schalldämmung für jeden beliebigen Zeitpunkt zu erreichen.

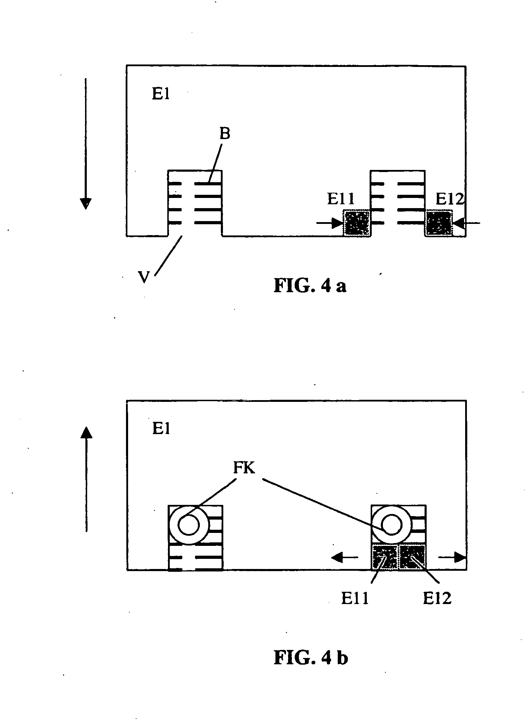

Die **Figur 4** **a** zeigt eine weitere bevorzugte Ausführungsform der Erfindung, wobei das Schallschutzelement E1 weitere Vertiefungen V aufweist, die sich in der hier dargestellten Ausführungsform rechteckförmig in die Schallschutztür erstrecken. An den Rändern der Vertiefung V ist eine Vielzahl an Bürsten B angebracht, die den Zwischenraum entsprechend schalldämmend abschließen, wobei in der Figur 4a die Bürsten lediglich schematisch dargestellt sind, um die Übersichtlichkeit der Figur zu bewahren.

Ebenso ist ersichtlich, dass die zweite Vertiefung V, welche sich rechts von der ersten Vertiefung befindet, zusätzliche Schallschutzelemente E11 und E12 aufweist, die, wie die Pfeile andeuten, von links nach rechts und von rechts nach links verschoben werden können. Diese zusätzlichen Schallschutzelemente E11 und E12 dienen einer weiteren zusätzlichen Schalldämmung neben den Bürsten B.

Ebenso ist durch den groß dargestellten Pfeil in Figur 4a verdeutlicht, dass das Schallschutzelement E1 vertikal von oben nach unten und umgekehrt in Richtung des Förderbandes verschoben werden kann.

In **Figur 4b** ist der Fall der Ausführungsform von Figur 4a dargestellt, wobei das Schallschutzelement in Richtung der Förderkette FK des Förderbandes 20 vertikal nach unten verschoben wurde. Die Förderkette FK liegt dabei in der Vertiefung V auf dem Schallschutzelement E1 auf und wird von den Bürsten schalldämmend umgeben.

Zusätzlich wurden nach dem Schritt des Herabsenkens des Schallschutzelements E1 auf die Förderkette FK weitere zusätzliche Schallschutzelemente E11 und E12 im unteren Bereich der Vertiefung V von links nach rechts und von rechts nach links verschoben, sodass die zusätzlichen Schallschutzelemente neben den Bürsten B bei der rechten Vertiefung V für eine zusätzliche Schalldämmung sorgen.

Durch die Pfeile ist weiter angedeutet, dass nach einem entsprechenden Bearbeitungsprozess in der Fördervorrichtung die Schallschutzelemente E1, E11 und E12 entsprechend in die entgegengesetzten Richtungen bewegt werden können und in einem weiteren Bearbeitungsschritt das Schallschutzelement E1 wieder auf das Förderband zubewegt werden kann und die zusätzlichen Schallschutzelemente E11 und E12 wieder verschlossen werden können.

### Bezugszeichenliste

- 10: Fördervorrichtung
- 20: Förderband
- 30: Ausnehmung

- A: Austrittsöffnung
- B: Bürsten
- E: Eintrittsöffnung

- E1: erstes Schallschutzelement
- E2: zweites Schallschutzelement
- E3: drittes Schallschutzelement
- E4: viertes Schallschutzelement

- E5 bis E12: weitere Schallschutzelemente auf dem Förderband

- E11: zusätzliches Schallschutzelement
- E12: zusätzliches Schallschutzelement

- ES: ergänzendes Schallschutzelement

- FK: Förderkette
- AES: Ausnehmung im Bereich des ES

- G: Werkstück
- G': bearbeitetes Werkstück

- L: Länge eines Werkstücks

- P1: erste Position
- P2: zweite Position
- P2a: Position nach der zweiten Position
- P3: dritte Position
- P4: vierte Position

- R: Bewegungsrichtung
- S: vorherbestimmte Strecke
- SB: Schalldämmender Bereich
- V: Vertiefung
- W: schalldämmende Wände

## Patentansprüche

1. Schalldämmende Fördervorrichtung (10), umfassend:
ein Förderband (20), welches in eine Richtung (R) bewegbar ist;
einen schalldämmenden Bereich (SB), welcher mindestens eine Öffnung (E, A) aufweist, wobei das Förderband (20) den schalldämmenden Bereich (SB) über die Öffnung (E, A) durchläuft;
mindestens zwei schließende Schallschutzelemente (E1, E2), welche sich im Inneren des schalldämmenden Bereichs (SB) befinden;
die Öffnung (E, A) zu jedem beliebigen Zeitpunkt durch mindestens eines der Schallschutzelemente (E1, E2) geschlossen ist
**dadurch gekennzeichnet, dass**
das Förderband mindestens eine Ausnehmung (30) zum Aufnehmen der Schallschutzelemente (E1, E2, E3, E4) aufweist.

2. Schalldämmende Fördervorrichtung gemäß Anspruch 1, wobei die schalldämmende Fördervorrichtung die Öffnung (E, A) in Form einer Eintrittsöffnung (E) und eine Austrittsöffnung (A) umfasst, weiter umfassend Schallschutzelemente (E1, E2, E3, E4), **dadurch gekennzeichnet, dass** die Eintrittsöffnung (E) zu jedem beliebigen Zeitpunkt durch mindestens eines der Schallschutzelemente (E1, E2) geschlossen ist und dass die Austrittsöffnung (A) zu jedem beliebigen Zeitpunkt durch mindestens eines der Schallschutzelemente (E3, E4) geschlossen ist.

3. Schalldämmende Fördervorrichtung gemäß den vorhergehenden Ansprüchen, wobei im Bereich der Ausnehmung (30) mindestens ein weiteres Schallschutzelement (E5, E6, E7, E8, E9, E10, E11, E12) angeordnet ist.

4. Schalldämmende Fördervorrichtung gemäß den vorhergehenden Ansprüchen, wobei das Förderband (20) in der schalldämmenden Vorrichtung kreisförmig angeordnet sein kann.

5. Verfahren zum Befördern mindestens eines Werkstücks (G) mittels einer schalldämmenden Fördervorrichtung (10) gemäß den Vorrichtungsansprüchen, wobei das Verfahren bei der Eintrittsöffnung (E) der Fördervorrichtung (10) die folgenden Schritte aufweist:
- Verschließen eines Schallschutzelements (E1, E2) bei einer Position P2;
- Bewegen des Förderbands in die Bewegungsrichtung (R), bis sich das Werkstück (G) zwischen der ersten Position P1 und der zweiten Position P2 befindet;
- Verschließen eines Schallschutzelements (E1, E2) bei der ersten Position P1.

6. Verfahren gemäß dem vorhergehenden Verfahrensanspruch, weiter umfassend den Schritt:
- Bewegen mindestens eines geschlossenen Schallschutzelements (E1, E2) um eine Strecke (S) in die Bewegungsrichtung (R) bis sich das mindestens eine Schallschutzelement (E1, E2) bei einer Position P2a befindet.

7. Verfahren gemäß Anspruch 6, wobei das mindestens eine geschlossene Schallschutzelement (E1, E2) mit der Geschwindigkeit des Förderbandes in die Bewegungsrichtung R bewegt wird.

8. Verfahren gemäß den vorhergehenden Verfahrensansprüchen, wobei das Verfahren weiter den Schritt umfasst:
- Öffnen eines Schallschutzelements (E1, E2) und Verschieben des Schallschutzelements (E1, E2) entgegen der Bewegungsrichtung (R) des Förderbandes zu der Position P1.

9. Verfahren zum Befördern mindestens eines Werkstücks (G) mittels einer schalldämmenden Fördervorrichtung (10) gemäß den vorhergehenden Vorrichtungsansprüchen, wobei das Verfahren bei der Austrittsöffnung (A) der Fördervorrichtung (10) die folgenden Schritte aufweist:
- Bewegen mindestens eines geschlossenen Schallschutzelements (E3, E4) in die Bewegungsrichtung (R) um eine vorherbestimmte Strecke (S) von der Position P3 zu der Position P4;
- Öffnen eines Schallschutzelements (E3, E4) bei einer Position P4;
- Bewegen eines Schallschutzelements (E3, E4) entgegen der Bewegungsrichtung R des Förderbandes von der Position P4 zur Position P3 und Verschließen eines Schallschutzelements (E3, E4) bei einer Position P3;
- Öffnen eines Schallschutzelements (E3, E4) bei der Position P4.

10. Verfahren gemäß dem vorhergehenden Verfahrensanspruch, wobei mindestens ein Schallschutzelement (E3, E4) mit der Geschwindigkeit des Förderbandes in die Bewegungsrichtung R bewegt wird.

11. Verfahren zum Betreiben einer schalldämmenden Fördervorrichtung (10) gemäß den vorhergehenden Verfahrensansprüchen, **dadurch gekennzeichnet, dass** die vorherbestimmte Strecke (S) größer als die Längenabmessung (L) eines auf dem Förderband (20) befindlichen Werkstückes (G) ist.

## Claims

1. Sound-absorbing conveyor device (10), comprising: a conveyor belt (20) which can be moved in a direction (R);
a sound-absorbing zone (SB) which has at least one opening (E, A), wherein the conveyor belt (20) runs through the sound-absorbing zone (SB) via the opening (E, A);
at least two closing sound-protection elements (E1, E2) which are located inside the sound-absorbing zone (SB);
the opening (E, A) is closed at any point in time by at least one of the sound-protection elements (E1, E2),
**characterized in that**
the conveyor belt has at least one recess (30) to receive the sound-protection elements (E1, E2, E3, E4).

2. Sound-absorbing conveyor device according to claim 1, wherein the sound-absorbing conveyor device comprises the opening (E, A) in the form of an inlet (E) and an outlet (A), further comprising sound-protection elements (E1, E2, E3, E4), **characterized in that** the inlet (E) is closed at any point in time by at least one of the sound-protection elements (E1, E2) and **in that** the outlet (A) is closed at any point in time by at least one of the sound-protection elements (E3, E4).

3. Sound-absorbing conveyor device according to the previous claims, wherein at least one further sound-protection element (E5, E6, E7, E8, E9, E10, E11, E12) is arranged in the area of the recess (30).

4. Sound-absorbing conveyor device according to the previous claims, wherein the conveyor belt (20) can be arranged circular in the sound-absorbing device.

5. Method for conveying at least one workpiece (G) by means of a sound-absorbing conveyor device (10) according to the device claims, wherein the method comprises the following steps at the inlet (E) of the conveyor device (10):
- shutting a sound-protection element (E1, E2) at a position P2;
- moving the conveyor belt in the direction of movement (R) until the workpiece (G) is between the first position P1 and the second position P2;
- shutting a sound-protection element (E1, E2) at the first position P1.

6. Method according to the previous method claim, further comprising the step of:
- moving at least one closed sound-protection element (E1, E2) by a section (S) in the direction of movement (R) until the at least one sound-protection element (E1, E2) is in a position P2a.

7. Method according to claim 6, wherein the at least one closed sound-protection element (E1, E2) is moved at the speed of the conveyor belt in the direction of movement R.

8. Method according to the previous method claims, wherein the method further comprises the step of:
- opening a sound-protection element (E1, E2) and displacing the sound-protection element (E1, E2) against the direction of movement (R) of the conveyor belt to position P1.

9. Method for conveying at least one workpiece (G) by means of a sound-absorbing conveyor device (10) according to the previous device claims, wherein the method comprises the following steps at the outlet (A) of the conveyor device (10):
- moving at least one closed sound-protection element (E3, E4) in the direction of movement (R) by a predetermined section (S) from position P3 to position P4;
- opening a sound-protection element (E3, E4) at a position P4;
- moving a sound-protection element (E3, E4) against the direction of movement R of the conveyor belt from position P4 to position P3 and shutting a sound-protection element (E3, E4) at a position P3.
- opening a sound-protection element (E3, E4) at a position P4.

10. Method according to the previous method claim, wherein at least one sound-protection element (E3, E4) is moved in the direction of movement R at the speed of the conveyor belt.

11. Method for operating a sound-absorbing conveyor device (10) according to the previous method claims, **characterized in that** the predetermined section (S) is larger than the longitudinal dimension (L) of a workpiece (G) located on the conveyor belt (20).

## Revendications

1. Dispositif d'acheminement insonorisant (10), comprenant : une courroie d'acheminement (20) pouvant être déplacée dans une direction (R) ;
une zone d'insonorisation (SB) comportant au moins une ouverture (E, A), la courroie d'acheminement (20) pénétrant la zone d'insonorisation (SB) en passant par l'ouverture (E, A) ;
au moins deux éléments insonorisants (E1, E2) d'extrémité situés à l'intérieur de la zone d'insonorisation (SB) ;
l'ouverture (E, A) fermée à tout moment par au moins un des éléments insonorisants (E1 E2) ;
**caractérisé en ce que** :
la courroie d'acheminement comporte au moins un évidement (30) permettant de loger les éléments insonorisants (E1, E2, E3, E4).

2. Dispositif d'acheminement insonorisant selon la revendication 1, le dispositif d'acheminement insonorisant comprenant une ouverture (E, A) prenant la forme d'une ouverture d'admission (E) et d'une ouverture de sortie (A) et comprenant en outre des éléments insonorisants (E1, E2, E3, E4), **caractérisé en ce que** l'ouverture d'admission (E) est fermée à tout moment par au moins un des éléments insonorisants (E1, E2) et que l'ouverture de sortie (A) est fermée à tout moment par au moins un des éléments insonorisants (E3, E4).

3. Dispositif d'acheminement insonorisant selon les revendications précédentes, au moins un élément insonorisant (E5, E6, E7, E8, E9, E10, E11, E12) supplémentaire étant disposé dans la zone de l'évidement (30).

4. Dispositif d'acheminement insonorisant selon les revendications précédentes, la courroie d'acheminement (20) pouvant être disposée en forme de cercle dans le dispositif insonorisant.

5. Procédé d'acheminement d'au moins une pièce à usiner (G) à l'aide d'un dispositif d'acheminement insonorisant (10) selon les revendications de dispositif précédentes, le procédé comportant les étapes suivantes au niveau de l'ouverture d'admission (E) du dispositif d'acheminement (10) :
fermeture d'un élément insonorisant (E1, E2) dans une position P2 ;
déplacement de la courroie d'acheminement dans la direction de déplacement (R), jusqu'à ce que la pièce à usiner (G) se trouve entre la première position P1 et la deuxième position P2 ;
fermeture d'un élément insonorisant (E1, E2) dans la première position P1.

6. Procédé selon la revendication de procédé précédente, comprenant en outre l'étape suivante :
déplacement d'au moins un élément insonorisant (E1, E2) fermé autour d'un tronçon (S) dans la direction de déplacement (R) jusqu'à ce que l'au moins un élément insonorisant (E1 E2) se trouve dans une position P2a.

7. Procédé selon la revendication 6, l'au moins un élément insonorisant (E1, E2) fermé se déplaçant à la vitesse de la courroie d'acheminement dans la direction de déplacement R.

8. Procédé selon les revendications de procédé précédentes, le procédé comportant en outre l'étape suivante :
ouverture d'un élément insonorisant (E1, E2) et déplacement de l'élément insonorisant (E1, E2) dans le sens contraire à la direction de déplacement (R) de la courroie d'acheminement jusqu'à la position P1.

9. Procédé d'acheminement d'au moins une pièce à usiner (G) à l'aide d'un dispositif d'acheminement insonorisant (10) selon les revendications de dispositif précédentes, le procédé comprenant les étapes suivantes eau niveau de l'ouverture de sortie (A) du dispositif d'acheminement (10) :
déplacement d'au moins un élément insonorisant (E3, E4) fermé dans la direction de déplacement (R) autour d'un tronçon prédéfini (S) de la position P3 à la position P4 ;
ouverture d'un élément insonorisant (E3, E4) dans une position P4 ;
déplacement d'un élément insonorisant (E3, E4) dans le sens contraire à la direction de déplacement R de la courroie d'acheminement de la position P4 à la position P3 et fermeture d'un élément insonorisant (E3, E4) dans une position P3 ;
ouverture d'un élément insonorisant (E3, E4) dans la position P4.

10. Procédé selon la revendication de procédé précédente, l'au moins un élément insonorisant (E3, E4) se déplaçant à la vitesse de la courroie d'acheminement dans la direction de déplacement R.

11. Procédé d'exploitation d'un dispositif d'acheminement insonorisant (10) selon les revendications de procédé précédentes, **caractérisé en ce que** la longueur du tronçon prédéfini (S) est supérieure à la longueur (L) d'une pièce à usiner (G) se trouvant sur la courroie d'acheminement (20).
